# EUROPEAN PATENT APPLICATION

(11) **EP 2 770 654 A1**
(43) Date of publication of application: **27.08.2014**
(21) Application number: 12878754.6
(22) Date of filing: 15.06.2012
(51) Int. Cl.: H04J 14/02

(54) **DISASTER RECOVERY METHOD, DEVICE AND DISASTER RECOVERY SYSTEM OF OPTICAL COMMUNICATION SYSTEM**

(71) Applicant: Huawei Marine Networks Co., Limited, Tianjin 300457 (CN)
(72) Inventor: ZHANG, Wendou, Shenzhen Guangdong 518129 (CN); MA, Liping, Shenzhen Guangdong 518129 (CN); ZHANG, Likun, Shenzhen Guangdong 518129 (CN)
(74) Representative: Thun, Clemens
(86) International application number: PCT/CN2012/076979
(87) International publication number: WO 2013/185338

(57) **Abstract**

Embodiments of the present invention relate to a method, an optical add-drop multiplexer branching unit, and a system for disaster recovery of an optical communication system. The method for disaster recovery of an optical communication system using an optical add-drop multiplexer unit OADM includes: detecting a transmission link fault in an optical communication system; and when a transmission link fault is detected, switching the state of a link where the transmission link fault occurs from pass-through to loopback, so that an optical signal input from a non-faulty end of the link is looped back to the end for outputting. In this way, when a transmission link fault occurs in an optical communication system, the power level of a link where the transmission link fault occurs can be maintained by using the solutions in the embodiments of the present invention, thereby keeping transmission performance stable, and enhancing the disaster recovery capability of the optical communication system. Furthermore, the solutions in the embodiments of the present invention do not introduce extra energy into a transmission link, thereby introducing no spontaneous emission noise and ensuring system performance.

## Description

### TECHNICAL FIELD

The present invention relates to the field of communications, and in particular, to a method, an optical add-drop multiplexer branching unit, and a system for disaster recovery of an optical communication system.

### BACKGROUND

With the rapid development of information technologies, submarine cable networks have been deployed globally. A submarine cable optical communication system generally adopts a dense wavelength division multiplexing (Dense Wavelength Division Multiplexing, DWDM) technology and has become an important communication network for bearing important international communication services. The use of optical add-drop multiplexer branching units (Optical Add-Drop Multiplexer Branching Unit, OADM BU) for networking in submarine cable networks makes a full use of the capacity of an optical fiber pair, effectively lowers costs, and reduces transmission delay. However, the use of OADM BUs in networking poses a greater difficulty and challenge in network design and management, especially in disaster recovery and non-linearity management.

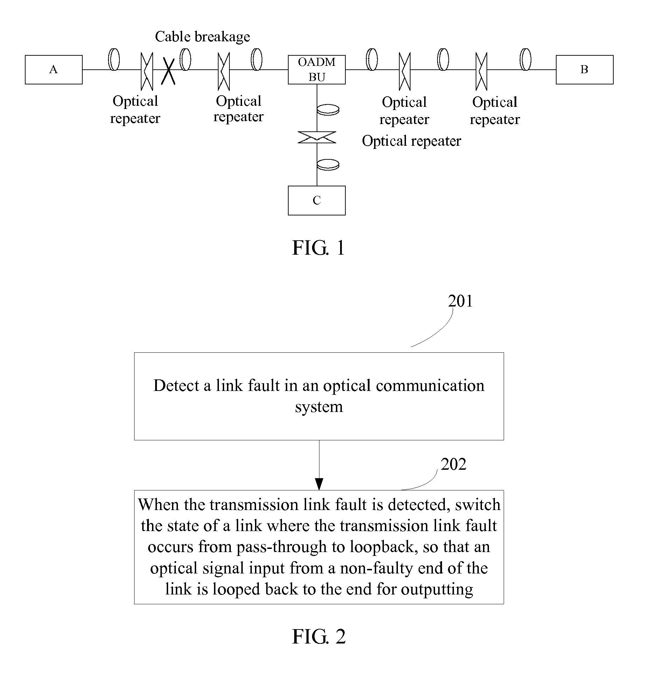

FIG. 1 shows a situation where an OADM BU is used to perform networking. It can be seen that, this network includes site A, site B, site C, and an OADM BU connecting these sites. A link between site A and site B is a trunk, and a link between site C and the OADM BU is a branch. An optical repeater is respectively disposed between site A, site B, site C, and the OADM BU. When a fault such as a cable breakage or an electric leakage of a submarine cable occurs between site A in the trunk and the OADM BU, an optical service from site A fails to reach the OADM BU and only a wavelength service added from site C can be transmitted through the OADM BU to site B. If submarine cable optical repeaters work in deeply saturated state, total output power is constant. Because of loss of a pass-through service signal from site A to site B, a service signal from site C to site B is amplified to a greater multiple and the single-wavelength optical power of the signal increases. This may lead to a high non-linear transmission cost, which degrades system performance and affects normal communication between site C and site B.

### SUMMARY

Embodiments of the present invention provide a method, an apparatus, and a system for disaster recovery of an optical communication system, so as to reduce the impact of a transmission link fault on the optical communication system.

In one aspect, an embodiment of the present invention provides a method for disaster recovery of an optical communication system using an optical add-drop multiplexer OADM, including: detecting a transmission link fault in an optical communication system; and when a transmission link fault is detected, switching the state of a link where the transmission link fault occurs from pass-through to loopback, so that an optical signal input from a non-faulty end of the link is looped back to the end for outputting.

In another aspect, an embodiment of the present invention provides an optical add-drop multiplexer branching unit OADM BU, configured to: when a transmission link fault occurs in a transmission link where the OADM BU is located, switch the state of a link where the transmission link fault occurs from pass-through to loopback, so that an optical signal input from a non-faulty end of the link is looped back to the end for outputting, the OADM BU specifically including: at least one optical coupling and loopback apparatus, at least two trunk ports, and at least one branch port, where the optical coupling and loopback apparatus is connected on a trunk between the trunk ports, or connected on a branch where the branch port is located, or connected on both the trunk and the branch; and the optical coupling and loopback apparatus has a pass-through state and a loopback state, and when a transmission link fault occurs in a link where the optical coupling and loopback apparatus is located, the optical coupling and loopback apparatus is capable of being switched from the pass-through state in normal working to the loopback state, so that an optical signal input from a non-faulty end of the optical coupling and loopback apparatus is looped back to the end for outputting.

In another aspect, an embodiment of the present invention provides a disaster recovery system for optical communication, including a detection apparatus, configured to detect a transmission link fault in an optical communication system; and the foregoing optical add-drop multiplexer branching unit.

It can be seen that, when a transmission link fault occurs in an optical communication system, the power level of a link where the transmission link fault occurs can be maintained by using the solutions in the embodiments of the present invention, thereby keeping transmission performance stable, and enhancing the disaster recovery capability of the optical communication system. Furthermore, the solutions in the embodiments of the present invention do not introduce extra energy into a transmission link, thereby introducing no spontaneous emission noise and ensuring system performance.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 shows a situation where an OADM BU is used to perform networking;
FIG. 2 is a flowchart of a method for disaster recovery of an optical communication system using an OADM according to an embodiment of the present invention;
FIG. 3 shows a situation where a fault occurs in an optical communication system using an OADM BU in networking;
FIG. 4 is a schematic structural diagram of a system for disaster recovery of an optical communication system according to an embodiment of the present invention;
FIG. 5 shows status of an OADM BU when no transmission link fault occurs in an optical communication system according to an embodiment of the present invention;
FIG. 6 shows status of an OADM BU when a transmission link fault occurs in a trunk in an optical communication system according to an embodiment of the present invention;
FIG. 7 shows status of an OADM BU when a transmission link fault occurs in a branch in an optical communication system according to an embodiment of the present invention;
FIG. 8 shows an embodiment of the present invention that implements a disaster recovery function only on a trunk;
FIG. 9 shows an embodiment of the present invention that implements a disaster recovery function only on a branch;
FIG. 10 shows a four-port OADM BU;
FIG. 11 further shows another four-port OADM BU;
FIG. 12a and FIG. 12b show two implementation manners of optical coupling and loopback apparatuses according to embodiments of the present invention; and
FIG. 13 shows another implementation manner of an optical coupling and loopback apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be noted that, a transmission link fault involved in embodiments of the present invention includes various fault scenarios in which the solutions in the embodiments of the present invention can produce positive benefits, especially including submarine cable fault scenarios such as a cable breakage, an electric leakage, an underwater device fault, and so on. A cable breakage is generally caused by anchorage, fishing operations, underwater geological activities, and so on, and a common fault phenomenon is that both an optical fiber and an electrical cable break. An electric leakage is generally caused by a short circuit of a submarine-cable feed part to seawater, which is caused by wear and tear, corrosion, a damage from marine life, or other reasons. An underwater device fault refers to a fault in a device itself that is caused by various reasons (including various possible reasons such as electrical and optical ones), which results in a decrease or no-output of optical power.

FIG. 2 is a flowchart of a method for disaster recovery of an optical communication system using an OADM according to an embodiment of the present invention. As shown in FIG. 2, the method includes the following steps:
201: Detect a transmission link fault in an optical communication system. Herein, the transmission link fault can be detected by using any method with which a person skilled in the art is familiar, such as an optical time domain reflectometer (Optical Time Domain Reflectometer, OTDR) method, a direct current impedance detection method, a direct current capacitor detection method, an alternating current method, and so on. These methods are not detailed. A link where the transmission link fault occurs can be determined through step 201. When the transmission link fault occurs in a trunk, it is determined that a link where the transmission link is located is a trunk. When the transmission link fault occurs in a branch, it is determined that the link where the transmission link is located is a branch.
202: When the transmission link fault is detected, switch the state of a link where the transmission link fault occurs from pass-through to loopback, so that an optical signal input from a non-faulty end of the link is looped back to the end for outputting. As known by a person skilled in the art, a branch or a trunk in the optical communication system generally includes two opposite transmission directions. The inventors have noted that, for the same link, a signal input from one end and a signal output at the end have similar signal spectrum distribution. Therefore, when a transmission link fault occurs, by looping back an optical signal input from one end of the link to the end for outputting, signal power lost due to the transmission link fault can be compensated by using the signal input at the end. It should be noted that, in step 202, the state of the link where the transmission link fault occurs is switched from pass-through to loopback, so that the optical signal input from the non-faulty end of the link is looped back to the end for outputting. This step does not specify whether to loop back the optical signal of the faulty end, which can be looped back (if the optical signal exists) or is not looped back. This will be illustrated later with reference to specific embodiments.

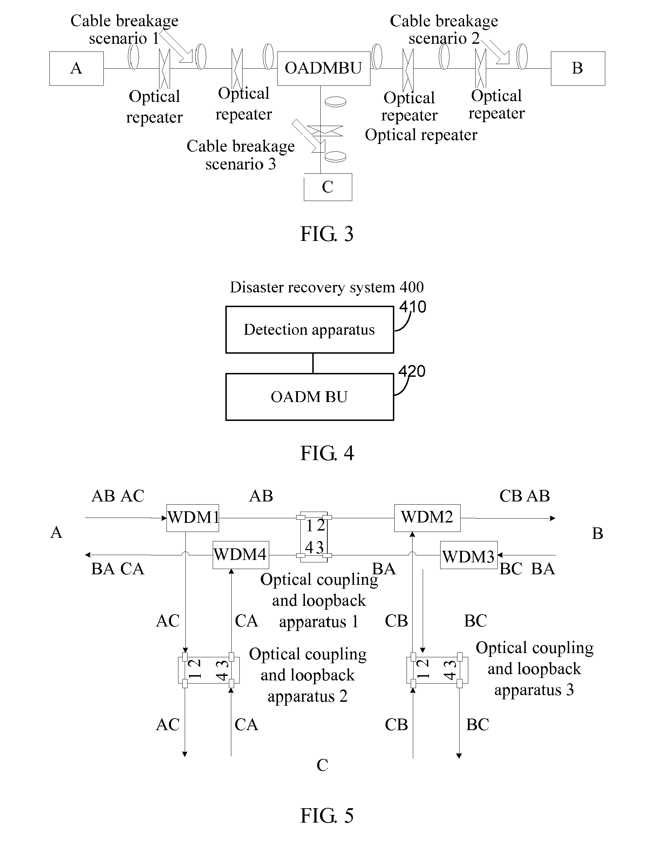

FIG. 3 shows a situation where a fault occurs in an optical communication system using an OADM BU in networking. This optical communication system includes three sites A, B, and C. A trunk is between site A and site B, and a branch is between the OADM BU and site C. FIG. 3 schematically shows three cable breakage scenarios. In cable breakage scenario 1, a trunk between site A and the OADM BU is faulty. In cable breakage scenario 2, a trunk between site B and the OADM BU is faulty. In cable breakage scenario 3, the branch between site C and the OADM BU is faulty. Generally, the number of wavelength services added to or dropped from an OADM BU branch is small, and the number of pass-through wavelength services is greater. Therefore, if a cable breaks in a trunk (such as in cable breakage scenario 1 and cable breakage scenario 2) and no optical compensation mechanism is available, single-wavelength power of a branch signal after passing an optical repeater connected on the trunk is subject to a greater change than that of a trunk signal if a branch cable breaks, meaning that a trunk cable breakage has relatively greater impact on a branch service. Therefore, in cable breakage scenario 1, after a cable breakage on the trunk between site A and the OADM BU is detected in step 201, an optical signal input from site B to site A is still looped back to site B for outputting in step 202, where the loopback optical signal from site B is used to compensate for optical signal loss from site A to site B, which is caused by the cable breakage between site A and the OADM BU, so that the impact of the cable breakage on an optical signal from site C to site B is minimized. In other words, in loopback state, signals from the OADM BU to site B include the signal sent from site C to site B and the signal that is sent from site B to site A but looped back to site B. Similarly, in cable breakage scenario 2, an optical signal input from site A to site B is looped backed to site A for outputting to compensate for optical signal loss from site B to site A.

If the number of services added to or dropped from a branch is small, a branch cable breakage (in cable breakage scenario 3) has little impact on performance of a service between sites in a trunk. Therefore, in this case, the impact of a branch cable breakage can be ignored, that is, the foregoing operation of the switchover to loopback state is not performed when a branch fault occurs. However, if the number of services added to or dropped from a branch is large, the impact of a branch cable breakage on performance of a service between sites in a trunk cannot be ignored. Therefore, similarly, the state of the link where the transmission link fault occurs needs to be switched from pass-through to loopback, so that the optical signal input from the non-faulty end of the link is looped back to the end for outputting. Branch fault scenarios will be described in detail in the following embodiments with reference to specific structures.

It can be easily thought of that, the foregoing method can be designed for a branch instead of a trunk, to implement disaster recovery for only the branch.

Preferably, transmission links of the optical communication system continue to be monitored after step 202. When a clearance of the transmission link fault is detected, the state of the link where the transmission link fault occurs is controlled to be switched from loopback to pass-through.

It can be seen that, according to the solutions in the embodiment of the present invention, when a transmission link fault occurs, an optical signal input from a non-faulty end of a link where the fault occurs is looped back to the end for outputting, and signal loss caused by the transmission link fault is compensated by using the signal input at the end. This maintains the power level of the link where the transmission link fault occurs, thereby minimizing the impact of the transmission link fault on other services, keeping transmission performance stable, and enhancing the disaster recovery capability of the optical communication system. Furthermore, the solutions in the embodiment of the present invention do not introduce extra energy into a transmission link, thereby introducing no spontaneous emission noise and ensuring system performance.

Correspondingly, an embodiment of the present invention provides an optical add-drop multiplexer branching unit OADM BU, which is configured to: when a transmission link fault occurs in a transmission link where the OADM BU is located, switch the state of a link where the transmission link fault occurs from pass-through to loopback, so that an optical signal input from an end of the link is looped back to the end for outputting. It can be seen that, the method described in the foregoing embodiment can be implemented by using the OADM BU.

FIG. 4 is a schematic structural diagram of a system for disaster recovery of an optical communication system according to an embodiment of the present invention. It can be seen that, the disaster recovery system 400 includes:
a detection apparatus 410, configured to detect a transmission link fault in an optical communication system; and
an optical add-drop multiplexer branching unit 420, configured to: when the foregoing detection apparatus detects a transmission link fault, switch the state of a link where the transmission link fault occurs from pass-through to loopback, so that an optical signal input from a non-faulty end of the link is looped back to the end for outputting. The OADM BU specifically includes at least one optical coupling and loopback apparatus, at least two trunk ports, and at least one branch port, where the optical coupling and loopback apparatus is connected on a trunk between the trunk ports, or connected on a branch where the branch port is located, or connected on both the trunk and the branch; and where the optical coupling and loopback apparatus has a pass-through state and a loopback state, and when a transmission link fault occurs in a link where the optical coupling and loopback apparatus is located, the optical coupling and loopback apparatus is capable of being switched from the pass-through state in normal working to the loopback state, so that an optical signal input from a non-faulty end of the optical coupling and loopback apparatus is looped back to the end for outputting.

In the embodiment of the present invention, the transmission link fault can be detected by using various detection apparatuses with which a person skilled in the art is familiar. For example, an optical time domain reflectometer detection apparatus can be used, which adopts optical time domain reflectometry to detect a breakage point of an optical link. Alternatively, a direct current impedance detection apparatus can be used. In most cases, an electrical cable fault phenomenon is caused by the contact between a conductor in an electrical cable and seawater. Therefore, in such cases, the direct current impedance detection apparatus may use a direct current impedance detection method to locate a fault point in combination with direct current impedance parameters of a cable and an underwater device. Alternatively, a direct current capacitor detection apparatus can be used especially if a cable fault scenario does not involve the contact between a conductor in an electrical cable and seawater. The direct current capacitor detection apparatus measures the capacitance between the conductor and seawater, and estimates location of a fault point based on test data calculation results. Alternatively, an alternating current detection apparatus can be used. Low-frequency and low-amplitude alternating current signals are loaded to a direct current source through a power feeding equipment (Power Feeding Equipment, PFE), and the alternating current signals radiate electromagnetic waves to outer space when being transmitted along a conducting wire. In this way, a signal at the bottom of a sea can be detected only through a dedicated sensor detection instrument by a maintenance vessel, so as to determine the location of a submarine cable fault. Alternatively, other detection apparatuses can also be used, for example, a fault point can be determined by reading input and output optical power of an underwater device and judging whether the optical power is normal.

According to an implementation manner, the optical add-drop multiplexer branching unit further includes a wavelength division multiplexer, configured to combine a wavelength add signal and a pass-through signal of the trunk, or split a wavelength drop signal and a pass-through signal of the trunk. Herein, the wavelength division multiplexer may be replaced with a coupler.

According to an implementation manner, the optical add-drop multiplexer branching unit is a three-port optical add-drop multiplexer branching unit.

For specific work processes of the detection apparatus 410 and the optical add-drop multiplexer branching unit 420, reference may be made to the description of the foregoing corresponding method part and details are not repeated here.

It can be seen that, according to the solutions in the embodiment of the present invention, when a transmission link fault occurs, an optical signal input from a non-faulty end of a link where the fault occurs is looped back to the end for outputting, and signal loss caused by the transmission link fault is compensated by using the signal input at the end. This maintains the power level of the link where the transmission link fault occurs, thereby minimizing the impact of the transmission link fault on other services, keeping transmission performance stable, and enhancing the disaster recovery capability of the optical communication system. Furthermore, the solutions in the embodiment of the present invention do not introduce extra energy into a transmission link, thereby introducing no spontaneous emission noise and ensuring system performance.

A disaster recovery system is described in detail in the following with reference to specific structures.

FIG. 5 shows status of an OADM BU when no transmission link fault occurs in an optical communication system according to an embodiment of the present invention. The OADM BU has three external ports, which are site A, site B, and site C respectively.

As shown in FIG. 5, the OADM BU includes four wavelength division multiplexers (Wavelength Division Multiplexer, WDM) and three optical coupling and loopback apparatuses. The four wavelength division multiplexers are respectively connected at the cross-connections of a trunk and a branch, and configured to combine a wavelength add signal and a pass-through signal and split a wavelength drop signal and a pass-through signal. Herein, the wavelength division multiplexer may be replaced with a coupler. The optical coupling and loopback apparatuses are respectively connected to both the trunk and the branch. The optical coupling and loopback apparatus has four ports, where the connection relationship between the ports may be configured as required. At least two states may be configured: a pass-through state, connecting port 1 to port 2, and connecting port 3 to port 4; and a loopback state, connecting port 3 to port 2, and connecting port 1 to port 4.

In FIG. 5, different markings on the trunk and the branch are used to indicate different optical signals. It can be seen that, in a situation where no transmission link fault occurs in the optical communication system shown in FIG. 5, pass-through signals AB and BA respectively from directions of A→B and B→A, wavelength drop signals AC and BC respectively from directions of A→C and B→C, and wavelength add signals CA and CB respectively from directions of C→A and C→B are included.

Pass-through signal AB from the direction A→B is input from site A, and after passing through WDM1, optical coupling and loopback apparatus 1 (in pass-through state), and WDM2, is output at site B. Likewise, pass-through signal BA from the direction B→A is input from site B, and after passing through WDM3, optical coupling and loopback apparatus 1 (in pass-through state), and WDM4, is output at site A.

Wavelength drop signal AC from the direction A→C is input from site A, and after passing through WDM1 and optical coupling and loopback apparatus 2 (in pass-through state), is output at site C. Wavelength add signal CA from the direction C→A is input from site C, and after passing through optical coupling and loopback apparatus 2 (in pass-through state) and WDM4, is output at site A.

Wavelength drop signal BC from the direction B→C is input from site B, and after passing through WDM3 and optical coupling and loopback apparatus 3 (in pass-through state), is output at site C. Wavelength add signal CB from the direction of C→B is input from site C, and after passing through optical coupling and loopback apparatus 3 (in pass-through state) and WDM2, is output at site B.

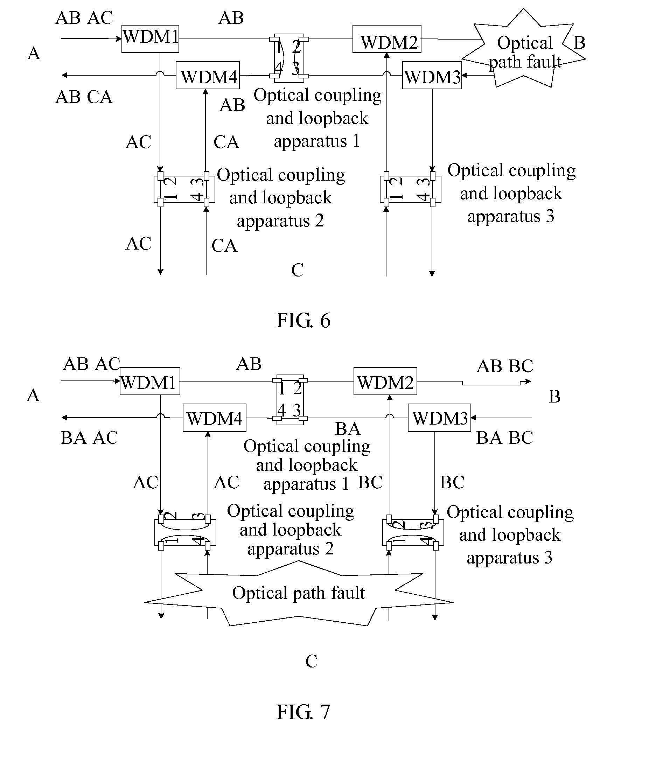

FIG. 6 shows status of an OADM BU when a transmission link fault occurs in a trunk in an optical communication system according to an embodiment of the present invention. Herein, a transmission link between site A and site B is a trunk in the optical communication system, and a transmission link between the OADM BU and site C is a branch in the optical communication system.

When a cable breakage occurs at site B, pass-through signal AB from the direction of A→B and wavelength add signal CB from the direction of C→B fail to reach site B, and pass-through signal BA from the direction of B→A and wavelength drop signal BC from the direction of B→C also fail to reach the OADM BU, resulting in partial optical power loss. That is to say, communications between site B and site C and between site B and site A are interrupted. To keep normal communication from end C to site A, optical power lost in the direction of B→A needs to be compensated. Therefore, the state of optical coupling and loopback apparatus 1 needs to be switched to a loopback state as shown in FIG. 6. After optical coupling and loopback apparatus 1 is switched to loopback state, signal flow is as follows: flow directions of wavelength drop signal AC from the direction of A→C and wavelength add signal CA from the direction of C→A remain the same; pass-through signal AB from the direction of A→B is input from site A, and after passing through WDM1 and optical coupling and loopback apparatus 1, and being returned to WDM4, and combined with wavelength add signal CA from the direction of C→A, is output at site A. In this way, the ratio of output optical power of wavelength drop signal AC from the direction of A→C to total optical power is the same as that in a normal situation, thereby maintaining the original power level of wavelength add signal CA from the direction of C→A in the link and guaranteeing stable transmission performance. In this way, a disaster recovery function is implemented for a cable breakage at site B. A method for disaster recovery of site A is the same as that of site B and not detailed here. It should be noted that, although the state of optical coupling and loopback apparatus 1 in FIG. 6 is switched to connecting ports 1 and 4 as well as connecting ports 2 and 3, or may also be switched to only connecting ports 1 and 4, that is, only an optical signal input from a non-faulty end of the link where the fault occurs is looped back to the end for outputting but an optical signal of a faulty end is not looped back. This does not change the essence of the present invention.

It can be seen that, according to the solutions in the embodiment of the present invention, when a transmission link fault occurs, an optical signal input from a non-faulty end of a link where the fault occurs is looped back to the end for outputting, and signal loss caused by the transmission link fault is compensated by using the signal input at the end. This maintains the power level of the link where the transmission link fault occurs, thereby minimizing the impact of the transmission link fault on other services, keeping transmission performance stable, and enhancing the disaster recovery capability of the optical communication system. Furthermore, the solutions in the embodiment of the present invention do not introduce extra energy into a transmission link, thereby introducing no spontaneous emission noise and ensuring system performance.

FIG. 7 shows status of an OADM BU when a transmission link fault occurs in a branch in an optical communication system according to an embodiment of the present invention. Herein, a transmission link between site A and site B is a trunk in the optical communication system, and a transmission link between the OADM BU and site C is a branch in the optical communication system.

When a cable breakage occurs on site C, wavelength drop signals AC from the direction of A→C and BC from the direction of B→C fail to reach site C, and wavelength add signals CA from the direction of C→A and CB from the direction of C→B fail to reach site A and site B respectively. Communications between site A and site C and between site B and site C are interrupted. To keep normal communication between site A and site B, power of a wavelength add signal that is lost in the directions of C→A and C→B needs to be compensated. Therefore, states of optical coupling and loopback apparatus 2 and optical coupling and loopback apparatus 3 need to be switched to a loopback state as shown in FIG. 7. After optical coupling and loopback apparatus 1 is switched to loopback state, signal flow is as follows: flow directions of pass-through signal AB from the direction of A→B and pass-through signal BA from the direction of B→A remain the same; wavelength drop signal AC from the direction of A→C is input from site A, and after passing through WDM1 and optical coupling and loopback apparatus 2, and being returned to WDM4 and combined with pass-through signal BA from the direction of B→A, is output at site A. Wavelength drop signal BC from the direction of B→C is input from site B, and after passing through WDM3 and optical coupling and loopback apparatus 3, and being returned to WDM2, and combined with pass-through signal AB from the direction of A→B, is output at site B. In this way, the ratio of optical power of pass-through signals AB from the direction of A→B and BA from the direction of B→A to total optical power is the same as that in normal situation, thereby maintaining the original power level of the pass-through signals in the link and guaranteeing stable transmission performance. In this way, a disaster recovery function is implemented for a cable breakage at site C.

If the number of wavelengths added to or dropped from site C in the branch is small, a branch cable breakage has little impact on the trunk. In an actual application scenario, optical coupling and loopback apparatus 2 and optical coupling and loopback apparatus 3 may be omitted. In this case, the disaster recovery function is not implemented for the C-side branch. In addition, similarly, although states of optical coupling and loopback apparatus 2 and 3 in FIG. 7 are switched by connecting ports 1 and 4 and connecting ports 2 and 3, the state may be switched by only connecting ports 2 and 3. This does not change the essence of the present invention.

It can be seen that, according to the solutions in the embodiment of the present invention, when a transmission link fault occurs, an optical signal input from a non-faulty end of a link where the fault occurs is looped back to the end for outputting, and signal loss caused by the transmission link fault is compensated by using the signal input at the end. This maintains the power level of the link where the transmission link fault occurs, thereby minimizing the impact of the transmission link fault on other services, keeping transmission performance stable, and enhancing the disaster recovery capability of the optical communication system. Furthermore, the solutions in the embodiment of the present invention do not introduce extra energy into a transmission link, thereby introducing no spontaneous emission noise and ensuring system performance.

In addition, the disaster recovery function may be implemented only on a branch or a trunk.

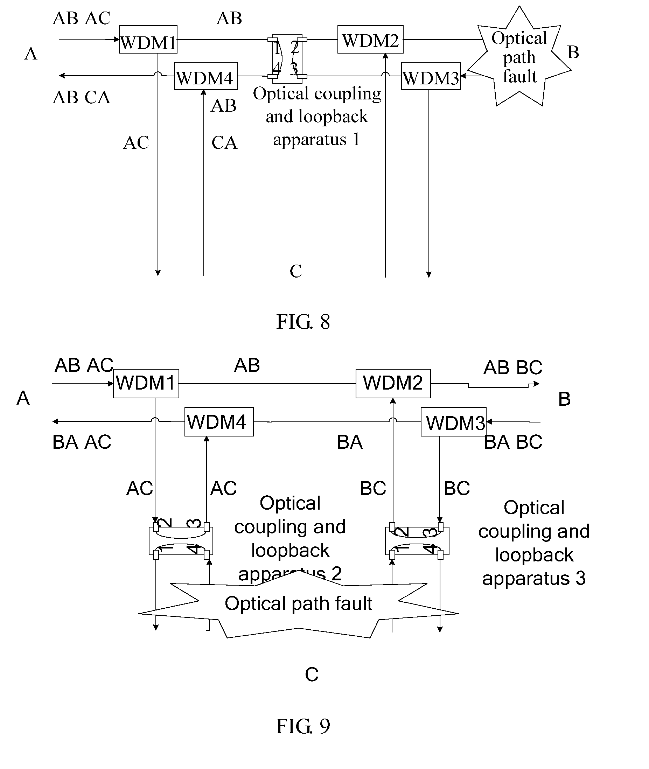

FIG. 8 shows an embodiment of the present invention that implements a disaster recovery function only on a trunk. It can be seen that, an optical coupling and loopback apparatus is disposed only on a trunk between site A and site B. When a transmission link fault occurs in the trunk, the optical coupling and loopback apparatus connected on the trunk is switched from a pass-through state in normal working to a loopback state. FIG. 9 shows an embodiment of the present invention that implements a disaster recovery function only on a branch. It can be seen that, an optical coupling and loopback apparatus is disposed only on a trunk where site C is located. When a transmission link fault occurs in the branch, the optical coupling and loopback apparatus connected on the branch is switched from a pass-through state in normal working to a loopback state.

In the embodiments from FIG. 6 to FIG. 9, the optical add-drop multiplexer branching unit is a three-port OADM BU.

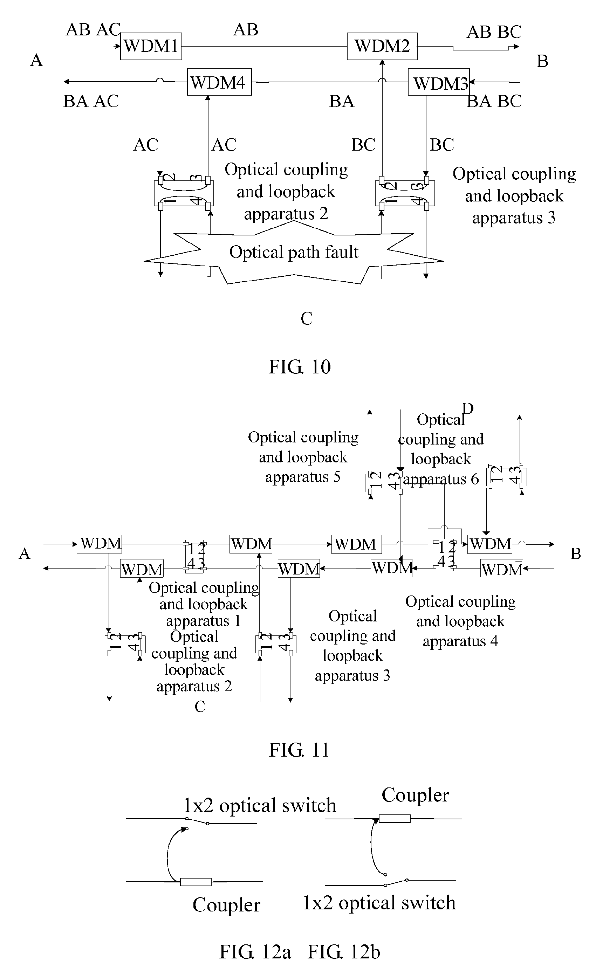

FIG. 10 shows a four-port OADM BU. Herein, a transmission link between site A and site B is a trunk in an optical communication system, and other transmission links are branches in the optical communication system. It can be seen that, five optical coupling and loopback apparatuses are included. When a fault occurs on site A or site B, optical coupling and loopback apparatus 1 is switched to a loopback state; when a fault occurs on site C, optical coupling and loopback apparatuses 2 and 3 are switched to a loopback state; and when a fault occurs on site D, optical coupling and loopback apparatuses 4 and 5 are switched to a loopback state.

FIG. 11 further shows another four-port OADM BU. Herein, a transmission link between site A and site B is a trunk in an optical communication system, and other transmission links are branches in the optical communication system. It can be seen that, six optical coupling and loopback apparatuses are included. When a fault occurs on site A, optical coupling and loopback apparatus 1 is switched to a loopback state; when a fault occurs on site B, optical coupling and loopback apparatus 4 is switched to a loopback state; when a fault occurs on site C, optical coupling and loopback apparatuses 2 and 3 are switched to a loopback state; and when a fault occurs on site D, optical coupling and loopback apparatuses 5 and 6 are switched to a loopback state.

In FIG.10 and FIG. 11, the specific signal flow after a switchover is easily known from the foregoing embodiments and not detailed here.

It should be noted that, the solutions in the embodiments of the present invention are not limited to the foregoing three-port or four-port cases. Based on the instructions in the embodiments of the present invention, it is easy for a person skilled in the art to derive an OADM BU with more ports.

It can be seen that, according to the solutions in the embodiment of the present invention, when a transmission link fault occurs, an optical signal input from an end of a link where the transmission link fault occurs is looped back to the end for outputting, and signal loss caused by the transmission link fault is compensated by using the signal input at the end, thereby minimizing the impact of the transmission link fault on other services and enhancing the disaster recovery capability of the optical communication system. In addition, with a simple transmission link structure and a small number of components, the disaster recovery solution in the embodiment of the present invention has an advantage of low costs. Furthermore, this disaster recovery solution is a relatively generic one because it is independent of an added or dropped wavelength and the number of added or dropped wavelengths in an optical communication system. Furthermore, the solutions in the embodiment of the present invention do not introduce extra energy into a transmission link, thereby introducing no spontaneous emission noise and ensuring system performance.

In the embodiments of the present invention, the optical coupling and loopback apparatus is a 2x2 optical switch, which can be implemented in a plurality of manners.

FIG. 12a and FIG. 12b show two implementation manners of optical coupling and loopback apparatuses according to embodiments of the present invention. It can be seen that, the optical coupling and loopback apparatus is formed of an optical coupler and a two-state optical switch. FIG. 12a and FIG. 12b show that when no transmission link fault occurs, the optical switch is in normal state 1. However, when a transmission link fault occurs, the optical switch is switched to state 2, which is different from the state shown in the figures, to connect two parallel transmission links.

It should be noted that, only part of the optical coupling and loopback apparatus is shown in FIG. 12a and FIG. 12b, for example, the part involving ports 1 and 4 or the part involving ports 2 and 3 in the optical coupling and loopback apparatus from FIG. 5 to FIG. 11. In practice, each optical coupling and loopback apparatus may include two structures shown in FIG. 12a or FIG. 12b. For example, two structures shown in FIG. 12a or two structures shown in FIG. 12b are separately used, or the structure shown in FIG. 12a and the structure shown in FIG. 12b are used. In addition, as described in the foregoing embodiments, only an optical signal input from a non-faulty end of a link where a fault occurs is looped back to the end for outputting, but no optical signal of the faulty end is looped back. In this case, only the structure in FIG. 12a or FIG. 12b is sufficient to achieve the goal of the present invention.

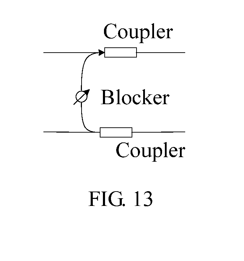

FIG. 13 shows another implementation manner of an optical coupling and loopback apparatus according to an embodiment of the present invention. It can be seen that, the optical coupling and loopback apparatus may be formed of an optical coupler and an optical blocker. When no transmission link fault occurs, the optical blocker is in a blocked state and two parallel transmission links work properly. When a transmission link fault occurs, the optical block is switched to a conduction state to connect the two parallel transmission links.

It should also be noted that, only part of the optical coupling and loopback apparatus is shown in FIG. 13, for example, the part involving ports 1 and 4 or the part involving ports 2 and 3 in the optical coupling and loopback apparatus from FIG. 5 to FIG. 11. In practice, each optical coupling and loopback apparatus may include one or two structures shown in FIG. 13.

It can be seen that, in the embodiment of the present invention, extra energy is not introduced into a transmission link, thereby introducing no spontaneous emission noise and ensuring system performance.

It should also be noted that, the transmission link fault in the embodiments of the present invention refers to that an optical signal fails to be properly transmitted on a transmission link, which may include a non-optical fault scenario, for example, a repeater failing to work because of a power supply open-circuit or short-circuit, with a phenomenon that an optical signal cannot be properly transmitted. In this case, the solutions in the embodiments of the present invention can be used to implement disaster recovery.

The described embodiments are merely exemplary. A person skilled in the part should understand that, the optical coupling and loopback apparatus may be implemented in other manners.

A person skilled in the art should understand that, the apparatus module division in the embodiments of the present invention is merely function division. In practice, the described functional modules may be split or combined for a specific structure.

The sequence numbers of the preceding embodiments of the present invention are merely for ease of description but do not indicate the preference of the embodiments.

The solutions disclosed in the claims also fall within the protection scope of the embodiments of the present invention.

A person of ordinary skill in the art may understand that, all or a part of the processes of the method in the foregoing embodiments may be implemented by a computer program instructing relevant hardware. The program may be stored in a computer readable storage medium.

The foregoing descriptions are merely exemplary embodiments of the present invention, but are not intended to limit the protection scope of the present invention. Any modification, equivalent replacement, or improvement made within the spirit and principle of the present invention shall fall within the protection scope of the present invention.

## Claims

1. A method for disaster recovery of an optical communication system using an optical add-drop multiplexer OADM, comprising:
detecting a transmission link fault in an optical communication system; and
when a transmission link fault is detected, switching the state of a link where the transmission link fault occurs from pass-through to loopback, so that an optical signal input from a non-faulty end of the link is looped back to the end for outputting.

2. The method according to claim 1, wherein:
when the link where the transmission link fault occurs is a trunk, switching the state of the trunk from pass-through to loopback.

3. The method according to claim 1 or 2, wherein:
when the link where the transmission link fault occurs is a branch, switching the state of the branch from pass-through to loopback.

4. The method according to any one of claims 1 to 3, further comprising:
when a clearance of the transmission link fault is detected, controlling the state of the link where the transmission link fault occurs to be switched from loopback to pass-through.

5. An optical add-drop multiplexer branching unit OADM BU, configured to: when a transmission link fault occurs in a transmission link where the OADM BU is located, switch the state of the link where the transmission link fault occurs from pass-through to loopback, so that an optical signal input from a non-faulty end of the link is looped back to the end for outputting, the OADM BU specifically comprising:
at least one optical coupling and loopback apparatus, at least two trunk ports, and at least one branch port, wherein the optical coupling and loopback apparatus is connected on a trunk between the trunk ports, or connected on a branch where the branch port is located, or connected on both the trunk and the branch; and
the optical coupling and loopback apparatus has a pass-through state and a loopback state, and when a transmission link fault occurs in a link where the optical coupling and loopback apparatus is located, the optical coupling and loopback apparatus is capable of being switched from the pass-through state in normal working to the loopback state, so that an optical signal input from a non-faulty end of the optical coupling and loopback apparatus is looped back to the end for outputting.

6. The optical add-drop multiplexer branching unit according to claim 5, wherein: when the transmission link fault occurs in the trunk, the optical coupling and loopback apparatus connected on the trunk is switched from the pass-through state in normal working to the loopback state.

7. The optical add-drop multiplexer branching unit according to claim 5 or 6, wherein: when the transmission link fault occurs in the branch, the optical coupling and loopback apparatus connected on the branch is switched from the pass-through state in normal working to the loopback state.

8. The optical add-drop multiplexer branching unit according to any one of claims 5 to 7, further comprising a wavelength division multiplexer, configured to combine a wavelength add signal and a pass-through signal of the trunk, or split a wavelength drop signal and a pass-through signal of the trunk.

9. The optical add-drop multiplexer branching unit according to any one of claims 5 to 8, wherein the optical add-drop multiplexer branching unit is a three-port optical add-drop multiplexer branching unit.

10. The optical add-drop multiplexer branching unit according to any one of claims 5 to 9, wherein the optical coupling and loopback apparatus is an optical switch.

11. The optical add-drop multiplexer branching unit according to any one of claims 5 to 10, wherein the optical coupling and loopback apparatus is formed of an optical coupler and an optical blocker, or formed of an optical coupler and an optical switch.

12. A disaster recovery system for optical communication, comprising:
a detection apparatus, configured to detect a transmission link fault in an optical communication system; and
the optical add-drop multiplexer branching unit according any one of claims 4 to 11.
